**Europäisches Patentamt**

**European Patent Office**

**Office européen des brevets**

(11) Veröffentlichungsnummer: **0 418 787 A2**

# EUROPÄISCHE PATENTANMELDUNG

(21) Anmeldenummer: 90117870.7

(22) Anmeldetag: 17.09.90

(51) Int. Cl.⁵: **G05D 15/01**

(30) Priorität: 19.09.89 DE 3931143

(43) Veröffentlichungstag der Anmeldung:
27.03.91 Patentblatt 91/13

(84) Benannte Vertragsstaaten:
**CH DE FR IT LI NL SE**

(71) Anmelder: **Siemens Aktiengesellschaft**
**Wittelsbacherplatz 2**
**W-8000 München 2(DE)**

(72) Erfinder: **Fuchs, Axel, Dipl.-Ing.**
**Jahnstrase 133**
**W-6100 Darmstadt(DE)**
Erfinder: **Isermann, Rolf, Prof. Dr.-Ing.**
**Am Hermertsberg 2a**
**W-6104 Seeheim 1(DE)**
Erfinder: **Janik, Werner, Dipl.-Ing.**
**Friedrichstrasse 25**
**W-6148 Heppenheim(DE)**
Erfinder: **Reiss, Thomas, Dipl.-Ing.**
**Starkenburgring 14**
**W-6146 Alsbach(DE)**
Erfinder: **Wanke, Peter, Dipl.-Ing.**
**Budapester Strasse 8**
**W-6000 Frankfrurt 56(DE)**
Erfinder: **Schulz, Herbert, Prof. Dr.-Ing.**
**Holunderweg 19**
**W-6110 Dieburg(DE)**
Erfinder: **Gebauer, Klaus Peter, Dipl.-Ing.**
**Am Schillberg 10**
**W-6204 Taunusstein(DE)**
Erfinder: **Schönherr, Herbert, Dipl.-Ing.**
**Heinrichstrasse 54**
**W-6108 Weiterstadt(DE)**

(54) Verfahren zur Überwachung des Betriebs einer Werkzeugmaschine.

(57) Bei einem Verfahren zur Überwachung des Betriebs einer Werkzeugmaschine, vorzugsweise zur spanabhebenden Bearbeitung, stellt ein den Bearbeitungsprozeß darstellendes mathematisches Modell den Zusammenhang von Parametern des Bearbeitungsprozesses und ggf. der Werkzeugmaschine einerseits und von an der Werkzeugmaschine meßbaren Größen andererseits dar. Mit den beim Betrieb auftretenden Größen werden über das Modell die jeweiligen Parameter berechnet und die berechneten Parameter bewertet.

EP 0 418 787 A2

Fig. 1

# EP 0 418 787 A2

## VERFAHREN ZUR ÜBERWACHUNG DES BETRIEBS EINER WERKZEUGMASCHINE

Die Erfindung betrifft ein Verfahren zur Überwachung des Betriebs einer Werkzeugmaschine, vorzugsweise zur spanabhebenden Bearbeitung.

Fehler an einer Werkzeugmaschine können zu erheblichen Stillstands- und Reparaturzeiten führen. Außerdem können Qualitätsmängel der hergestellten Erzeugnisse auf Fehlern an der Werkzeugmaschine beruhen. Insbesondere zur Erkennung von Werkzeugverschleiß oder -bruch ist die Messung von Kräften, Drehmomenten, Schwingungen oder Temperaturen bekannt. Derartige Verfahren sind beispielsweise beschrieben in Schneider-Fresenius, W. (Hrsg.): Technische Fehlerfrühdiagnose - Einrichtungen. R. Oldenbourg-Verlag, München, (1985). Weck, M.: Maschinendiagnose in der automatisierten Fertigung. Industrie-Anzeiger 103 (1981), 181-190. Pfeifer, T. und Schüller, H.: Integrierte Meßtechnik für die automatisierte Fertigung. Automobil-Industrie (1987), 241-248.

Die bekannten Verfahren erfordern jedoch den Einbau zusätzlicher Sensoren und sind meist auf die Erkennung einzelner Fehler zugeschnitten. Zur Erkennung von mehreren Fehlern ist ein erheblicher Aufwand an Sensoren, Kabeln, Meßumformern und ähnlichem erforderlich. Dieses bereitet bei Werkzeugmaschinen besondere technische Schwierigkeiten aus Gründen der rauhen Umgebungsbedingungen im Bearbeitungsraum, der rotierenden Elemente und des mangelnden Einbauraums.

Aufgabe der vorliegenden Erfindung ist es, unter weitgehender Verwendung der bei einer CNC-Steuerung ohnehin vorhandenen Meßsignale eine Überwachung des Betriebs zu ermöglichen, wobei eine möglichst frühzeitige und detaillierte Information über Fehler bzw. sich anbahnende Fehler gewonnen werden soll.

Das erfindungsgemäße Verfahren ist dadurch gekennzeichnet, daß ein mindestens den Bearbeitungsprozeß darstellendes mathematisches Modell den Zusammenhang von Parametern des Bearbeitungsprozesses und von an der Werkzeugmaschine meßbaren Größen darstellt, daß mit den beim Betrieb auftretenden Größen über das Modell die jeweiligen Parameter berechnet werden und daß die berechneten Parameter bewertet werden. Das mathematische Modell kann ferner Parameter der Werkzeugmaschine umfassen.

Obwohl das erfindungsgemäße Verfahren die Verwendung weiterer Sensoren nicht ausschließt, ist es mit dem erfindungsgemäßen Verfahren möglich, aufgrund weniger meßbarer Größen Veränderungen des Bearbeitungsprozesses und der Werkzeugmaschine frühzeitig zu erkennen, so daß geeignete Maßnahmen ergriffen werden können.

Eine Weiterbildung des erfindungsgemäßen Verfahrens besteht darin, daß das Modell von einer Differentialgleichung gebildet wird, daß Variable in der Differentialgleichung zu messende Größen darstellen und daß den Variablen zugeordnete Koeffizienten die Parameter bilden. Dabei kann die Differentialgleichung eine komplexe Form, beispielsweise

$$y(t) = -a_1\dot{y}(t) - a_2\ddot{y}(t) - \ldots + b_0 u(t) + b_1\dot{u}(t) + \ldots,$$

aufweisen, wobei $y(t)$ und $u(t)$ meßbare Größen sind.

Für eine Reihe von Anwendungsfällen ist eine Differentialgleichung der Form $y(t) = -T_1 \cdot \dot{y}(t) + K \cdot u(t) + T_D \cdot \dot{u}(t)$ vorteilhaft, wobei die Variable $y(t)$ eine Kraft oder eine der Kraft entsprechende Größe darstellt, die beim Bearbeitungsprozeß ausgeübt wird, und $u(t)$ eine für den Bearbeitungsprozeß charakteristische Bewegungsgröße darstellt.

Untersuchungen haben gezeigt, daß mit dieser Form des parametrischen Modells bei spanabhebenden Bearbeitungsprozessen, also beispielsweise beim Fräsen, Bohren und Schleifen, wesentliche Fehler mit einem vertretbaren Rechenaufwand erkannt werden können. Es ist im Rahmen der Erfindung jedoch möglich, auch komplexere Modelle vorzusehen, welche Eigenschaften der Antriebe und Übertragungselemente und/oder weitere Einzelheiten des Bearbeitungsprozesses nachbilden.

Je nach Voraussetzungen im einzelnen kann die Anwendung einer anderen Weiterbildung der Erfindung vorteilhaft sein, die darin besteht, daß das Modell von einer algebraischen Gleichung gebildet wird, daß Variable in der Gleichung zu messende Größen darstellen und daß den Variablen zugeordnete Koeffizienten die Parameter bilden.

Vorzugsweise erfolgt die Bewertung der berechneten Parameter durch einen Vergleich mit vorgegebenen Sollparametern und/oder durch eine Berechnung der Änderungsgeschwindigkeit der Parameter und einen Vergleich der berechneten Änderungsgeschwindigkeit mit einer vorgegebenen Änderungsgeschwindigkeit.

3

Bei einer anderen Weiterbildung des erfindungsgemäßen Verfahrens ist vorgesehen, daß in Abhängigkeit von den bewerteten Parametern aus einem Speicher Fehlerinformationen ausgelesen werden. Dabei kann heuristisches Wissen in Form von Prozeßgeschichte, Fehlerbäumen und Fehlerstatistiken eingesetzt werden, um in einem Interferenzmechanismus die bewerteten Parameter zu deuten. Mit wachsendem Prozeßwissen können somit On-line-Experten-Systeme zur Fehlerdiagnose aufgebaut werden.

Je nach Gegebenheiten im einzelnen können die Fehlerinformationen Fehlermeldungen und/oder Vorschläge für Maßnahmen zur Behebung von Fehlern und/oder zur Vermeidung von voraussichtlichen Fehlern beinhalten.

Als Eingangsgrößen für das erfindungsgemäße Verfahren sind geeignet: die Drehzahl eines oder mehrerer Antriebe, die Spannung und/oder die Stromaufnahme eines oder mehrerer Antriebe und/oder eine oder mehrere der folgenden Größe: Position des Werkzeug- bzw. Werkstückträgers, Geschwindigkeit des Werkzeug- bzw. Werkstückträgers, Winkelstellungen rotierender Teile, Bearbeitungskräfte, Wellendrehmomente. Zur indirekten Messung der Antriebskraft ist bei hydraulischen Antrieben der Druck eine geeignete Größe.

Um Störungen durch statistische Schwankungen der meßbaren Größen zu vermeiden, ist gemäß einer anderen Weiterbildung vorgesehen, daß die meßbaren Größen vor der Berechnung der Parameter tiefpaßgefiltert werden. Dabei werden vorzugsweise die für einen Bearbeitungsprozeß zur Tiefpaßfilterung erforderlichen Daten (Eckfrequenz, Filterkoeffizienten) für jeweils einen Bearbeitungsprozeß ermittelt und für eine spätere Wiederholung des gleichen Bearbeitungsprozesses nichtflüchtig gespeichert.

Eine andere Weiterbildung der Erfindung besteht darin, daß bei einer Bearbeitung von Werkstücken in jeweils mehreren Bearbeitungsschritten die während der Ausführung eines Bearbeitungsschrittes berechneten Parameter gespeichert und bei der Ausführung des gleichen Bearbeitungsschrittes beim folgenden Werkstück zu Vergleichszwecken ausgelesen werden. Dadurch kann die Entwicklung eines Bearbeitungsprozesses über viele Werkstücke hinweg beobachtet werden, wobei eine Verknüpfung der berechneten Parameter verschiedener Bearbeitungsschritte bei der Fehlerdiagnose nicht ausgeschlossen ist.

Ein Ausführungsbeispiel der Erfindung ist in der Zeichnung anhand mehrerer Figuren dargestellt und in der nachfolgenden Beschreibung näher erläutert. Es zeigt:

Fig. 1 ein Blockschaltbild einer Einrichtung zur Durchführung des erfindungsgemäßen Verfahrens,

Fig. 2 ein Flußdiagramm zur Erläuterung des erfindungsgemäßen Verfahrens, wobei ein entsprechendes Programm zum Betrieb des in der Einrichtung nach Fig. 1 vorgesehenen Prozessors vorgesehen ist,

Fig. 3 eine schematische Darstellung eines Filters für die an der Werkzeugmaschine gemessenen Größen,

Fig. 4 ein Unterprogramm des im Flußdiagramm nach Fig. 2 dargestellten Programms,

Fig. 5 bis Fig. 8 Teile des Unterprogramms nach Fig. 4 in detaillierterer Darstellung,

Fig. 9 ein weiteres Unterprogramm des im Flußdiagramm nach Fig. 2 dargestellten Programms und

Fig.10 einen Teil des Unterprogramms nach Fig. 9 in detaillierterer Darstellung.

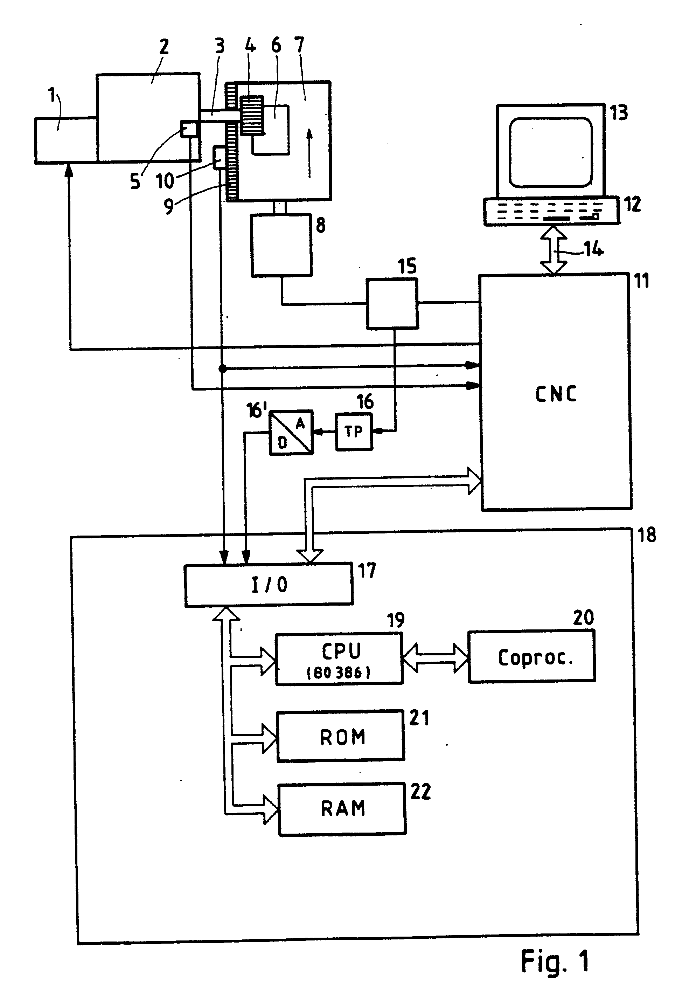

Fig. 1 stellt schematisch Teile einer Fräsmaschine, eine mit der Fräsmaschine in an sich bekannter Weise verbundene Einrichtung zur CNC-Steuerung und eine Einrichtung zur Durchführung des erfindungsgemäßen Verfahrens dar.

Ein Hauptantriebsmotor 1 treibt über ein Getriebe 2, in welchem eine Spindel 3 gelagert ist, das Werkzeug 4 an. An der Spindel 3 ist ein Drehzahlgeber 5 vorgesehen, der Impulse, die jeweils einen vorgegebenen Drehwinkel kennzeichnen, erzeugt. Ein Werkstück 6 ist auf einem Tisch 7 aufgespannt, der in Pfeilrichtung von einem Motor 8 über ein im einzelnen nicht dargestelltes Vorschubgetriebe bewegt wird. Zur Messung der Bewegung ist am Tisch 7 eine Feinskala 9 angebracht, die von einem opto-elektrischen Sensor 10 abgetastet wird. Dieser erzeugt pro Marke auf der Skala 9 einen Impuls, der an die CNC-Steuerung 11 weitergeleitet wird. Die Frequenz der vom Sensor 10 erzeugten Impulse ist somit ein Maß für die Vorschubgeschwindigkeit $v_f$.

Da CNC-Steuerungen an sich bekannt sind, sind außer einer Eingabetastatur 12 und einem Bildschirm 13, die über einen Datenbus 14 mit der CNC-Steuerung 11 verbunden sind, keine weiteren Einzelheiten der CNC-Steuerung dargestellt.

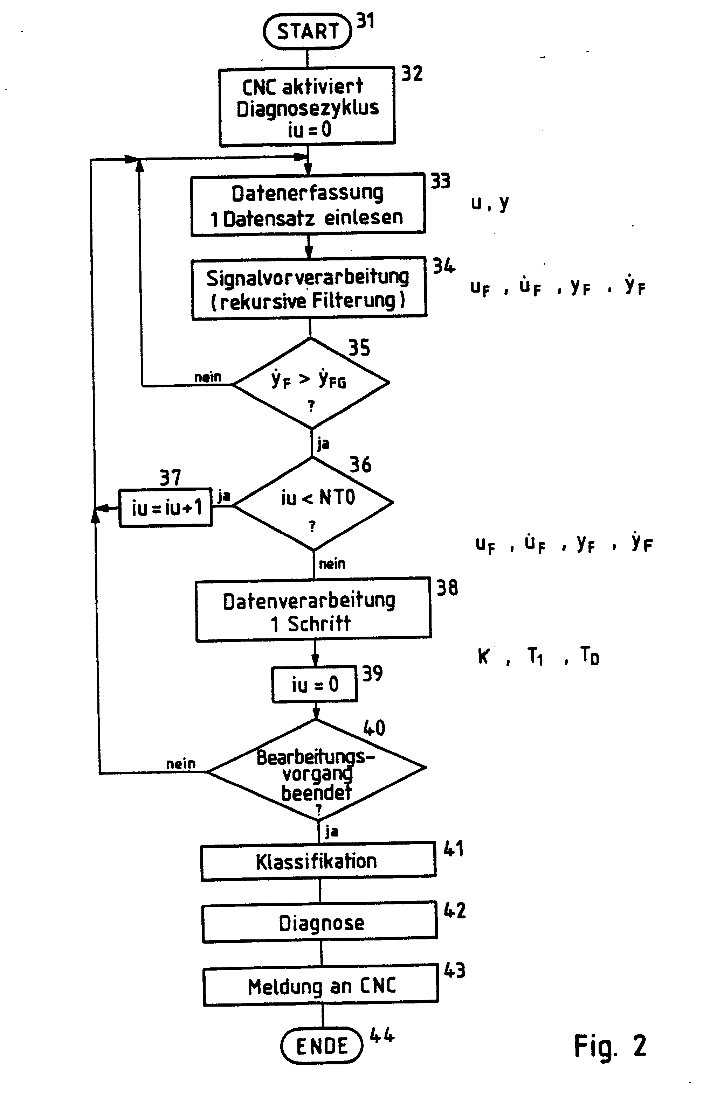

Bei dem anhand der Figuren 2 bis 5 beschriebenen Ausführungsbeispiel des erfindungsgemäßen Verfahrens beruht die Parameterschätzung auf einem Modell des Bearbeitungsprozesses, welches den Zusammenhang zwischen der Vorschubkraft und der Vorschubgeschwindigkeit beinhaltet. Es sind jedoch auch andere Modelle benutzbar, beispielsweise ein Modell, das auf dem Zusammenhang zwischen der Schnittkraft und der Schnittgeschwindigkeit beruht. Bei dem Ausführungsbeispiel wird die Vorschubgeschwindigkeit mit Hilfe des Sensors direkt gemessen, während ein Maß für die Vorschubkraft aus der Stromaufnahme $I_f$ des Motors 8 gewonnen wird. Dazu ist in die Stromzuführung zum Motor 8 ein Meßwandler 15 eingeschaltet, dessen Ausgangsspannung über einen Tiefpaß 16 einem Analog.Digital-Wandler 16' zugeleitet wird. Der Ausgang des Analog/Digital-Wandlers und der Sensor 10 sind mit Eingängen der Ein/Ausgabeeinheit 17 verbunden.

Die Ein/Ausgabeeinheit 17 ist Teil eines Rechners 18, der ferner einen Prozessor 19, einen Coprozessor 20, einen Nur-Lesespeicher 21 und einen Schreib/Lesespeicher 22 umfaßt. In an sich bekannter Weise dient ein Bussystem 25 zur Kommunikation der Teile des Rechners untereinander. Die Ein/Ausgabeeinheit 17 ist ferner mit der CNC-Steuerung verbunden, um einen notwendigen Datenaustausch zu ermöglichen. Dabei kann ferner vorgesehen sein, daß die Tastatur 12 und der Bildschirm 13 außer für die CNC-Steuerung 11 auch für den Rechner 18 benutzt werden kann. Im übrigen kann der Rechner 18 in die CNC-Steuerung integriert werden. Massespeicher und Ein/Ausgabeeinheiten können weitgehend gemeinsam benutzt werden.

Zur Durchführung des erfindungsgemäßen Verfahrens ist im Nur-Lesespeicher 21 ein Programm abgelegt, das schematisch in Fig. 2 anhand eines Flußdiagramms dargestellt ist.

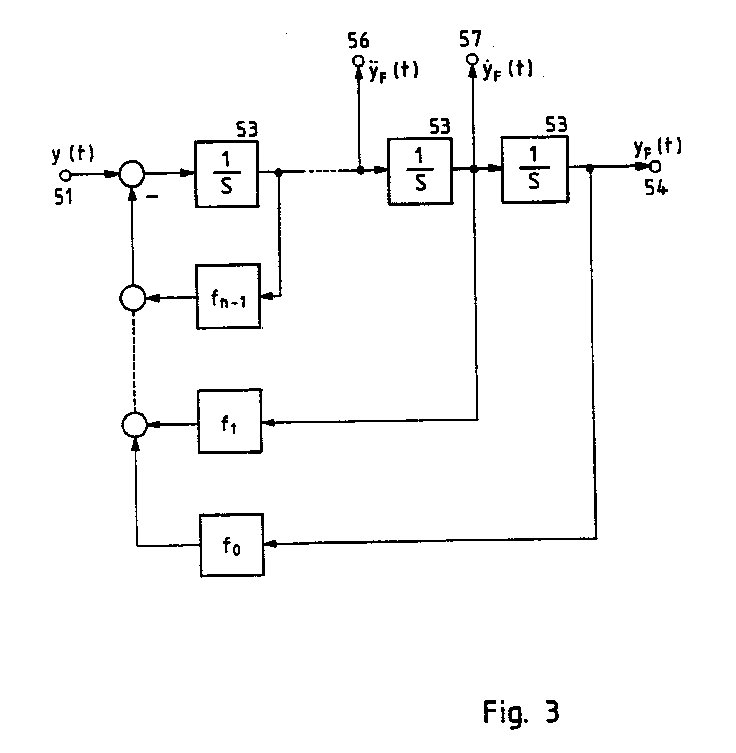

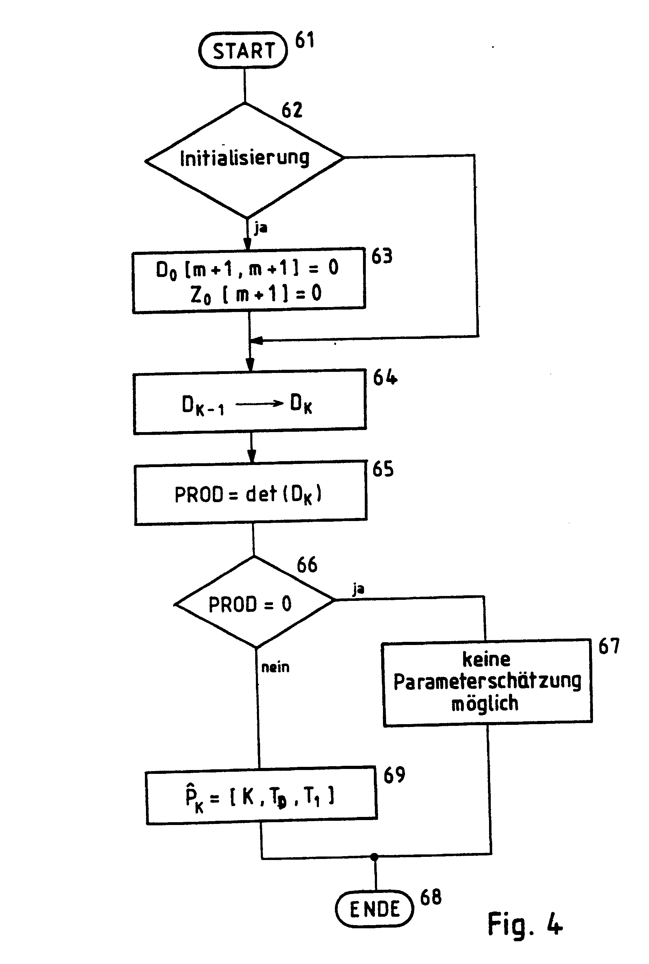

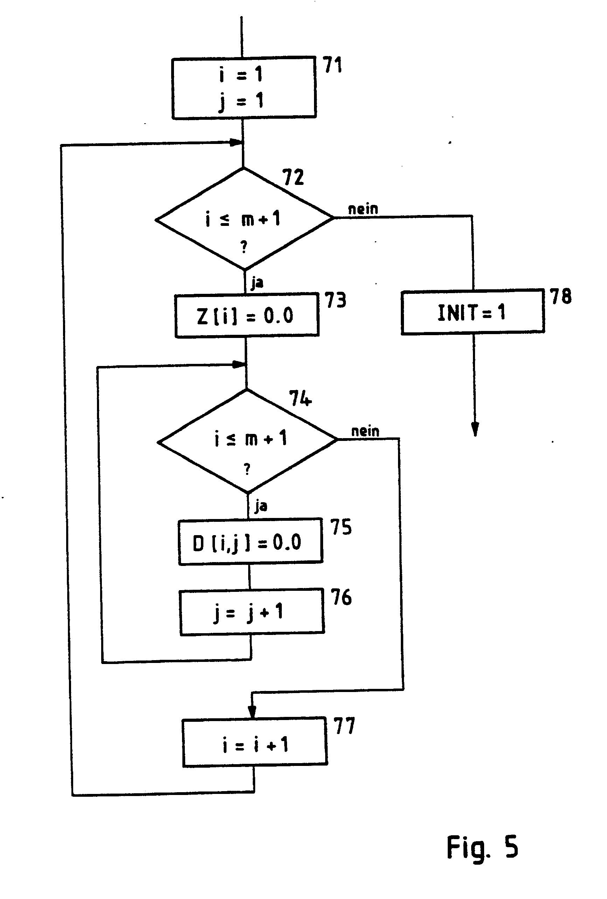

Nach einem Start des Programms bei 31 erfolgt eine weitere Abarbeitung des Programms erst, wenn bei 32 der Diagnosezyklus von der CNC-Steuerung aktiviert wird. Danach wird bei 33 ein Datensatz mit jeweils einem Wert von u und y eingelesen. Dabei bedeutet u die Vorschubgeschwindigkeit und y der die Vorschubkraft repräsentierende Strom des Motors 8. In einer Signalvorverarbeitung 34 erfolgt im wesentlichen eine rekursive Filterung. Dabei entstehen jeweils die gefilterten Größen $u_F$ und $y_F$ sowie deren Ableitungen $\dot{u}_F$ und $\dot{y}_F$ Die Struktur eines geeigneten Filters wird später im Zusammenhang mit Fig. 3 näher erläutert.

Da die derart ermittelten Größen noch keine Aussage über den Bearbeitungsprozeß zulassen, solange das Werkzeug nicht im Eingriff mit dem Werkstück ist, erfolgt eine sogenannte Anschnitterkennung, dadurch daß das Programm bei 35 in Abhängigkeit davon verzweigt wird, ob die Schnittkraft bzw. der Motorstrom plötzlich ansteigt. Dazu wird $\dot{y}_F$ mit einem gegebenen Grenzwert $\dot{y}_{FG}$ verglichen. Solange $\dot{y}_F$ noch nicht größer ist, werden die Programmschritte 33 bis 35 wiederholt. Ist jedoch der Anschnitt erfolgt, so schließt sich eine weitere Verzweigung 36 an, in welcher geprüft wird, ob eine vorgegebene Anzahl von Werten eingelesen wurde. Dieses erfolgt deshalb, weil die rekursive Filterung eine Datenreduktion bewirkt. Eine in dem Programmteil 32 auf 0 gesetzte Zählvariable iu wird bei der Verzweigung 36 daraufhin geprüft, ob ihr Wert noch kleiner als ein gegebener Wert NT0 ist. Ist dieses der Fall, wird bei 37 iu inkrementiert. Bei 33 werden die folgenden Werte für u und y eingelesen.

Hat jedoch iu den vorgegebenen Wert erreicht, wird in einem Unterprogramm 38 mit den Ausgangsgrößen des Butterworth Filters ein Schritt der Datenverarbeitung durchgeführt. Im Unterprogramm 38 erfolgt die Berechnung der Parameter K, $T_1$, $T_D$ in einer später im Zusammenhang mit Fig. 3 näher erläuterten Weise. Bei 39 wird die Zählvariable iu auf 0 gesetzt, worauf sich das Programm bei 40 solange in Richtung auf eine Wiederholung der Schritte 33 bis 39 verzweigt, bis von der CNC-Steuerung ein Signal eintrifft, daß der Verarbeitungsvorgang beendet ist.

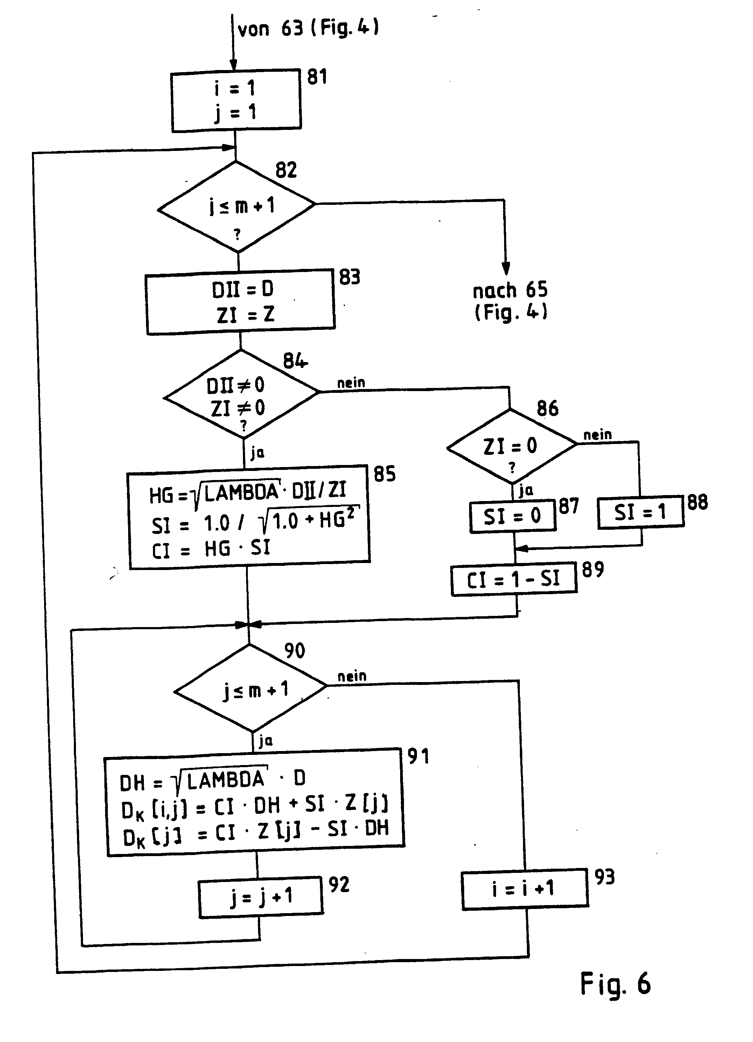

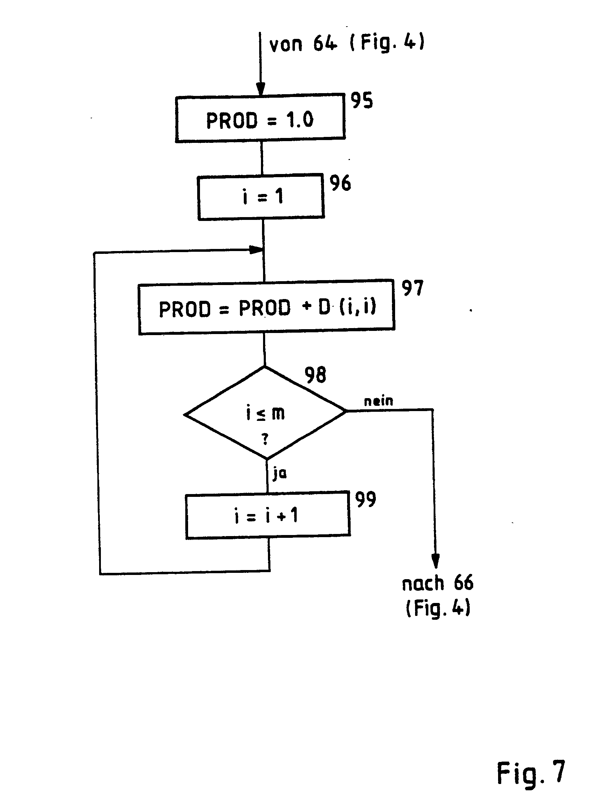

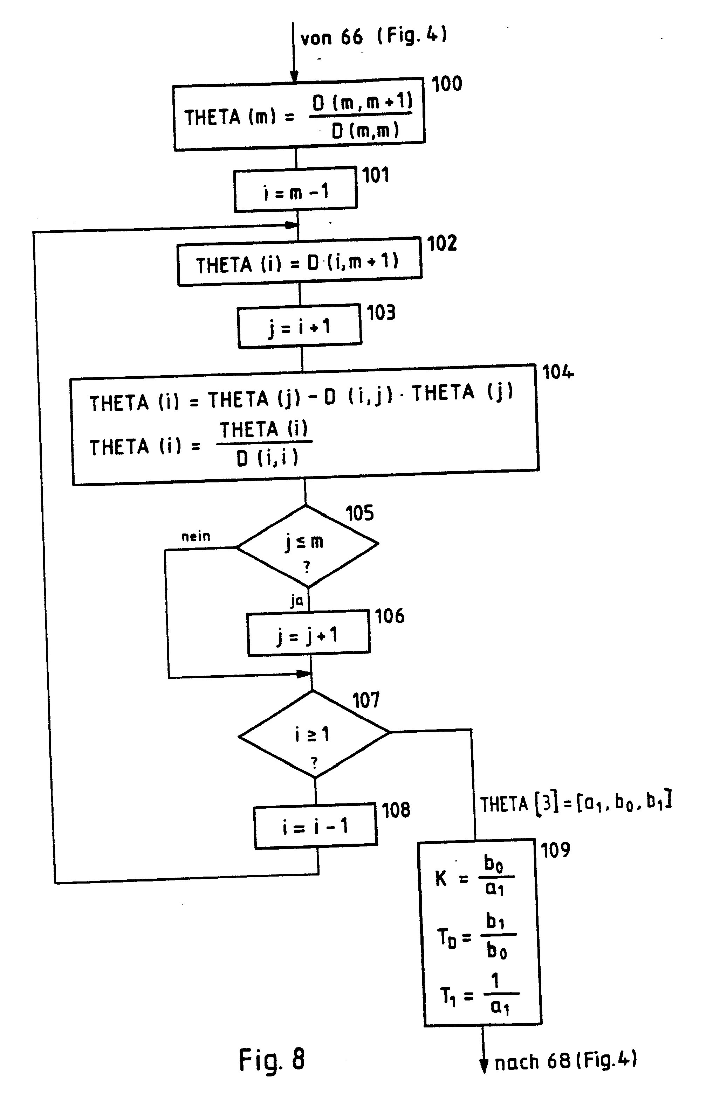

Im Anschluß daran erfolgt in einem Unterprogramm 41 eine Klassifikation der im Unterprogramm 38 berechneten Parameter. Einzelheiten dazu werden später im Zusammenhang mit Fig. 4 näher erläutert. Das Unterprogramm 41 gibt an ein weiteres Unterprogramm 42 nur die zu einer Diagnose relevanten Daten weiter. Aufgrund der geschätzten und klassifizierten Parameter erfolgt in dem weiteren Unterprogramm 42 eine Diagnose, wobei gespeicherte Fehlermeldungen ausgegeben werden. Dabei kann heuristisches Wissen in Form von Prozeßgeschichte, Fehlerbäumen und Fehlerstatistiken eingesetzt werden, um in einem Interferenzmechanismus die bewerteten Parameter zu deuten. Mit wachsendem Prozeßwissen können somit On-line-Experten-Systeme zur Fehlerdiagnose aufgebaut werden.

In Abhängigkeit von dem Ergebnis der Diagnose bei 42 erfolgt bei 43 eine Meldung an die CNC-Steuerung, die beispielsweise über den Bildschirm 13 (Fig. 1) ausgegeben werden kann. Bei 44 ist das Programm beendet.

Fig. 3 zeigt die Struktur eines rekursiven Filters, das vom Unterprogramm 34 (Fig. 2) gebildet wird. Die einem Eingang 51 zugeführte zu filternde Größe y(t) wird nach einer Subtraktion bei 52 nacheinander über (n-1) Integratoren 53 geleitet. Die Ausgangsgröße eines jeden Integrators wird mit einem Filterkoeffizienten $f_0$ bis $f_{n-1}$ bewertet und von der Eingangsgröße y(t) subtrahiert. Am Ausgang 54 des letzten Integrators 53 steht die gefilterte Größe $y_F(t)$ zur Verfügung, während von weiteren Ausgängen 55, 56 die erste Ableitung $\dot{y}_F(t)$ und bei Bedarf auch die zweite Ableitung

$$\ddot{y}_F(t)$$

abnehmbar sind. Durch entsprechende Wahl der Filterkoeffizienten $f_0$ bis $f_{n-1}$ können verschiedene Filtercharakteristika realisiert werden. Bei dem dargestellten erfindungsgemäßen Ausführungsbeispiel hat sich eine Butterworth-Charakteristik bewährt.

Fig. 4 stellt das Unterprogramm 38 (Fig. 2) als Flußdiagramm dar. Da eine Initialisierung lediglich beim erstmaligen Durchlauf des Unterprogramms 38 vorzunehmen ist, wird bei 62 zunächst geprüft, ob eine Initialisierung erforderlich ist. Ist dieses der Fall, erfolgt die Initialisierung bei 63 durch Nullsetzen der Felder $D[m+1,m+1]$ und $Z[m+1]$. Dabei ist im Falle des Ausführungsbeispiels $m = 3$. $Z[m+1]$ ist im Falle des Ausführungsbeispiels ein Meßvektor der Form $Z[4] = [-y_F,u_F,\dot{u}_F,\dot{y}_F]$. Das Feld D stellt die obere Dreiecksmatrix dar, in welcher die bisherigen Schätzinformationen gespeichert sind. Im Programmteil 64 wird die Dreiecksmatrix $D_{k-1}$ des vorangegangenen Programmdurchlaufs durch den neuen Meßvektor $Z_k$ aktualisiert. Dieses erfolgt dadurch, daß eine neue Dreiecksmatrix $D_k$ gebildet wird. Dabei wird ferner ein zeitlicher Gewichtungsfaktor LAMBDA berücksichtigt.

Im Programmteil 65 wird die Determinante PROD der Dreiecksmatrix durch Multiplikation der Werte der Diagonalen der Dreiecksmatrix $D_k$ berechnet.

Bei 66 wird geprüft, ob die Determinante PROD gleich 0 ist. Dieses kann der Fall sein, wenn noch nicht genügend Daten zur Auffüllung der Dreiecksmatrix D vorhanden sind oder einzelne Zustandsgrößen über mehrere Programmdurchläufe zu 0 werden. Ist dieses der Fall, wird bei 67 eine Information darüber gespeichert, daß keine Parameterschätzung möglich ist. Bei 68 ist das Unterprogramm 38 (Fig. 2) beendet. Im Programmteil 69 werden durch das Gaußsche Eliminationsverfahren aus der Dreiecksmatrix die physikalischen Prozeßparameter bzw. Kennwerte $\hat{P}_k = [K,T_D,T_1]$ berechnet.

Die Algorithmen, nach denen in den Programmteilen 64 und 65 vorgegangen wird, stellen Schätzgleichungen dar, die aus den Modellgleichungen abgeleitet sind und eine Schätzung der Parameter mit einem vergleichsweise geringen Rechenaufwand ermöglichen.

Eine Einführung in die Parameterschätzung, in welcher verschiedene Methoden erläutert sind, findet sich im Buch Rolf Isermann: Identifikation dynamischer Systeme, Band I, Springer-Verlag, 1988. Unter anderem ist ein Blockschaltbild der rekursiven Parameterschätzung nach der Methode der kleinsten Quadrate, in Bild 8.4 dargestellt.

Bei dem in Fig. 5 detaillierter dargestellten Teil 63 des Unterprogramms gemäß Fig. 4 werden zunächst zwei Zählvariablen i und j auf 1 gesetzt (71). Bei 72 verzweigt sich das Programm in Richtung auf den Programmteil 73, solange i noch nicht den Wert $m+1$ überschritten hat. Danach wird der Meßvektor Z[i] auf 0 gesetzt. Im Anschluß daran wird bei 74 geprüft, ob j den Wert $m+1$ überschritten hat. Ist dieses nicht der Fall, wird bei 75 jeweils ein Element D[i,j] der Dreiecksmatrix auf 0 gesetzt, worauf bei 76 j inkrementiert wird. Die Schleife 74 bis 76 wird $(m+1)$mal wiederholt - bei dem Ausführungsbeispiel viermal. Bei 77 wird i inkrementiert, worauf das Programm bei 72 fortgesetzt wird, bis auch i den Wert $m+1$ erreicht hat. Danach wird nach der Verzweigung 72 bei 78 ein Flag INIT = 1 gesetzt, um bei weiteren Programmdurchläufen die Initialisierung 63 (Fig. 4) zu umgehen.

Fig. 6 stellt den Programmteil 64 des Unterprogramms gemäß Fig. 4 dar, in welchem die Berechnung der Dreiecksmatrix D erfolgt. Dazu werden zunächst wiederum zwei Zählvariablen i und j, welche die Zeilen und Spalten innerhalb der Matrix darstellen, auf 1 gesetzt (81). Ist bei der Verzweigung 82 i größer als $m+1$, so ist die Berechnung der Dreiecksmatrix beendet. Der Programmteil 64 kann dann verlassen werden. Solange i jedoch kleiner als $m+1$ ist, werden zunächst zwei Hilfsvariablen DII und ZI im Programmteil 83 berechnet, welche ein Diagonalelement der Matrix D und ein Element des Meßvektors Z darstellen. Ist eine dieser Größen gleich 0, so erfolgt nach einer Verzweigung 84 eine weitere Verzweigung 86 in Abhängigkeit davon, ob ZI gleich 0 ist, worauf eine weitere Hilfsvariable SI bei 87 bzw. 88 entweder gleich 0 oder gleich 1 gesetzt wird. Im Anschluß daran wird im Programmteil 89 eine andere Hilfsvariable CI zu 1 - SI berechnet. SI und CI sind Transformationselemente, die für die weitere Berechnung benötigt werden.

Nach der Verzweigung 84 werden für den Fall, daß DII und ZI ungleich 0 sind, die Transformationselemente SI und CI nach den im Flußdiagramm angegebenen Gleichungen berechnet, wozu zunächst eine Hilfsgröße HG gebildet wird, in welche der zeitliche Gewichtungsfaktor LAMBDA eingeht. Bei 90 wird geprüft, ob j kleiner gleich $m+1$ ist. Trifft dieses zu, werden mit den bei 91 angegebenen Gleichungen die neue Dreiecksmatrix $D_k[i,j]$ und der neue Meßvektor $Z_k[j]$ berechnet. Dazu wird wiederum eine Zwischengröße DH benutzt. Nach einer Inkrementierung von j bei 92 wird die Berechnung bei 91 wiederholt, bis j größer als $m+1$ geworden ist. Danach wird bei 93 auch i inkrementiert und das Programm mit dem neuen Wert von i, beginnend mit der Verzweigung 82, nochmals durchlaufen.

Fig. 7 stellt den Programmteil 65 (Fig. 4) zur Berechnung der Determinante der Dreiecksmatrix dar. Zunächst werden bei 95 und 96 der Wert der Determinante PROD sowie eine Zählvariable i auf 1 gesetzt. Danach wird bei 97 der jeweilige Wert für PROD mit dem Element der Dreiecksmatrix mit den Koordinaten (i,i) multipliziert und der Variablen PROD zugewiesen. Solange i kleiner als m ist, erfolgt nach der Verzweigung 98 eine Inkrementierung von i und eine Wiederholung der Berechnung bei 97. Bei i = m sind alle auf der Diagonale liegenden Elemente der Dreiecksmatrix miteinander multiplziert.

Fig. 8 stellt den Programmteil 69 (Fig. 4) zur Auflösung des Gleichungssystems und Berechnung der Kennwerte dar. Dazu wird bei 100 zunächst eine. Größe THETA(m) berechnet. Im Anschluß daran wird eine Zählvariable i auf m-1 gesetzt. Danach wird im Programmteil 102 THETA(i) = D(i,m + 1) berechnet und bei 103 j inkrementiert. Im Programmteil 104 wird dann THETA(i) nach den dort angegebenen Gleichungen berechnet. Insgesamt bilden die Programmteile 100 bis 104 eine Realisierung der Gaußschen Elimination. In Programmteilen 105 bis 108 wird dann jeweils geprüft, ob die Zählvariablen i und j ihren Endwert erreicht haben, und j inkrementiert bzw i dekrementiert, bis die Berechnung von THETA[3] = $[a_1,b_0,b_1]$ abgeschlossen ist. Aus diesen Parametern werden dann im Programmteil 109 mit den dort angegebenen Gleichungen die Kennwerte K, $T_D$ und $T_1$ berechnet.

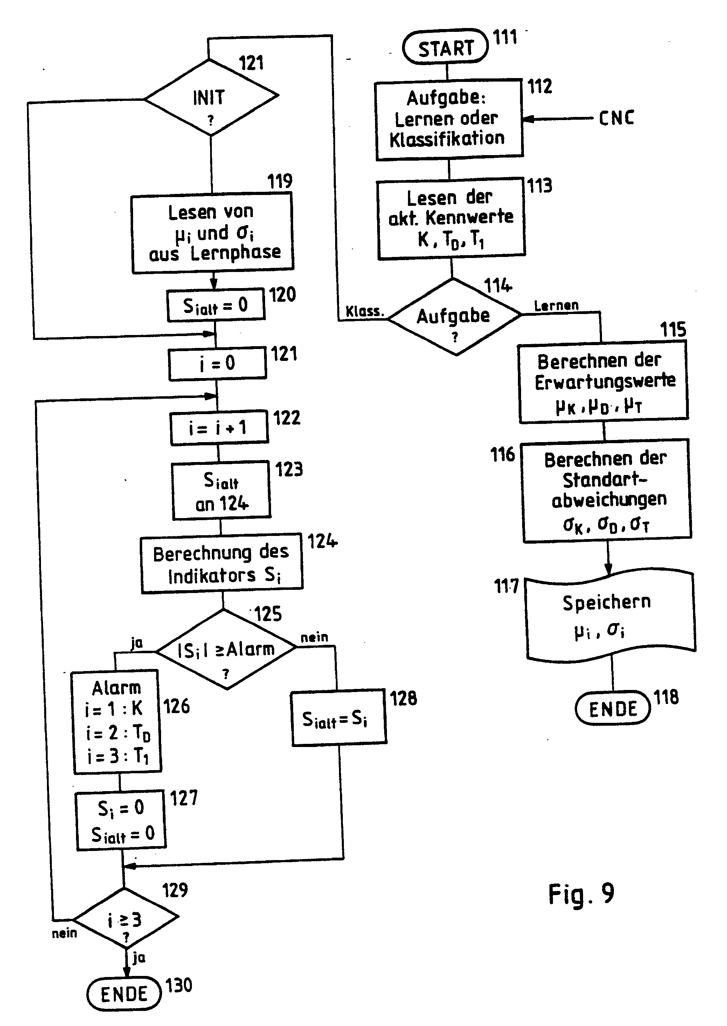

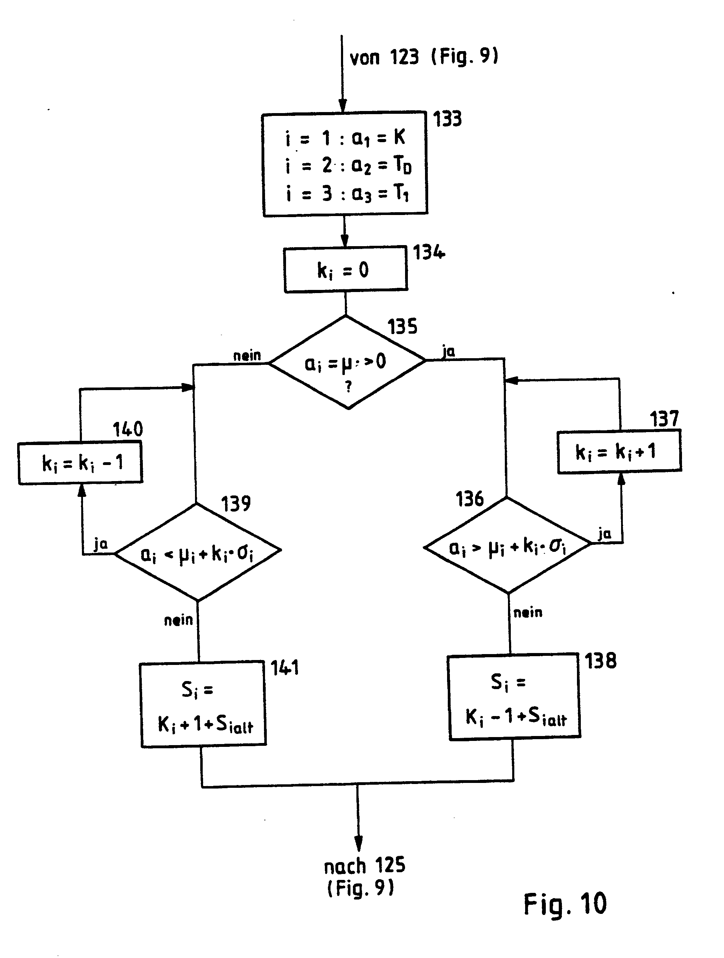

Das in Fig. 9 dargestellte Unterprogramm 41 (Fig. 2) bewirkt eine Klassifikation der Ergebnisse der Parameterschätzung gemäß Unterprogramm 38. Nach einem Start bei 111 wird bei 112 abgefragt, ob die von dem Parameterschätzer ausgegebenen Daten zur Klassifikation oder zum Erstellen einer Vergleichsbasis im Sinne eines Lernvorgangs bei einer späteren Überwachung verwendet werden sollen. Diese Information kann von der CNC-Steuerung zugeführt werden. Dadurch wird beispielsweise sichergestellt, daß bei gleichen Bearbeitungsschritten an nacheinander zu bearbeitenden Werkstücken ohne weiteres eine Klassifizierung vorgenommen wird.

Bei 113 werden die Kennwerte K, $T_D$ und $T_1$ gelesen. Danach verzweigt sich das Programm bei 114 in Abhängigkeit davon, welche Aufgabe bei 112 eingegeben wurde. Zum Lernen werden Erwartungswerte $\mu_k$, $\mu_D$ und $\mu_T$ beispielsweise als arithmetische Mittelwerte der entsprechenden Kennwerte berechnet. Im Programmteil 116 werden Standardabweichungen $\sigma_K$, $\sigma_D$ und $\sigma_T$ berechnet. Die Werte $\mu_i$ und $\sigma_i$ werden bei 117 abgespeichert, worauf das Unterprogramm bei 118 beendet wird.

Soll eine Klassifizierung erfolgen, so werden nach der Verzweigung 114 beim jeweils ersten Durchlauf des Programms als Initialisierung im Programmteil 119 die Werte $\mu_i$ und $\sigma_i$ gelesen, die in der Lernphase abgespeichert wurden. Im folgenden wird in dem Unterprogramm für die verschiedenen Kennwerte jeweils ein Indikator $S_i$ durch Akkumulation der Differenz zwischen den Kennwerten und den jeweiligen Erwartungswerten berechnet. Dazu wird zunächst ein zuvor errechneter Indikator $S_{ialt}$ auf 0 gesetzt (120). Wurde bereits eine Initialisierung durchgeführt, werden die Programmschritte 119 und 120 über die Verzweigung 121 umgangen. Danach wird i inkrementiert (122). Bei 123 erfolgt die Übergabe des zuletzt berechneten Indikators $S_i$ an den Programmteil 124, in welchem die Berechnung des neuen Indikators erfolgt.

Bei 125 verzweigt sich das Programm in Abhängigkeit davon, ob der Betrag des jeweils berechneten Indikators $S_i$ größer als eine vorgegebene Alarmschwelle ist. Ist dieses der Fall, wird bei 126 ausgegeben, welcher der Kennwerte zu dem Alarm geführt hat. Im Anschluß daran werden bei 127 sowohl der alte als auch der neue Indikator auf 0 gesetzt. Falls kein Alarm ausgegeben wird, wird bei 128 der Wert des neuen Indikators dem alten Indikator zugewiesen. Bei 129 wird geprüft, ob alle Kennwerte verarbeitet worden sind. Ist dieses nicht der Fall, werden die Programmschritte 122 bis 128 wiederholt. Sind alle Kennwerte abgearbeitet, so wird das Programm bei 130 beendet.

Fig. 10 zeigt den Programmteil 124 des in Fig. 9 dargestellten Programms, welcher zur Berechnung des Indikators $S_i$ dient. Je nachdem welchen Wert die Zählvariable i gerade einnimmt, wird bei 133 einer der Kennwerte K, $T_D$ und T· der Variablen $a_i$ zugewiesen. Daraufhin wird bei 134 eine weitere Zählvariable $k_i$ = 0 gesetzt. Um eine sinngemäß vorzeichenrichtige Berechnung von $S_i$ zu ermöglichen, verzweigt sich das Programm bei 135 in Abhängigkeit vom Vorzeichen der Differenz $(a_i - \mu_i)$. Ist die Differenz positiv, so wird eine von den Programmteilen 136 und 137 gebildete Schleife solange durchlaufen, bis $a_i$ nicht mehr größer als $\mu_i + k_i \cdot \sigma_i$ ist. Bei 138 wird dann der Indikator $S_i$ = $k_i - 1 + S_{ialt}$ gesetzt, wobei $S_{ialt}$ der vorangegangene Wert des Indikators ist. Durch die Programmteile 136 bis 138 wird bei k-maligem Überschreiten des Erwartungswertes $\mu_i$ um die Standardabweichung $\sigma_i$ der Indikator $S_i$ jeweils um 1 heraufgesetzt. Für negative Differenzen erfolgt die entsprechende Aufsummierung in den Programmteilen 139 bis 141.

## Ansprüche

1. Verfahren zur Überwachung des Betriebs einer Werkzeugmaschine, vorzugsweise zur spanabhebenden Bearbeitung, dadurch gekennzeichnet, daß ein mindestens den Bearbeitungsprozeß darstellendes mathematisches Modell den Zusammenhang von Parametern des Bearbeitungsprozesses und von an der Werkzeugmaschine meßbaren Größen darstellt, daß mit den beim Betrieb auftretenden Größen über das Modell die jeweiligen Parameter berechnet werden und daß die berechneten Parameter bewertet werden.

2. Verfahren nach Anspruch 1, dadurch gekennzeichnet, daß das mathematische Modell ferner Parameter der Werkzeugmaschine umfaßt.

7

3. Verfahren nach Anspruch 1, dadurch gekennzeichnet, daß das Modell von einer Differentialgleichung gebildet wird, daß Variable in der Differentialgleichung zu messende Größen darstellen und daß den Variablen zugeordnete Koeffizienten die Parameter bilden.

4. Verfahren nach Anspruch 1, dadurch gekennzeichnet, daß das Modell von einer algebraischen Gleichung gebildet wird, daß Variable in der Gleichung zu messende Größen darstellen und daß den Variablen zugeordnete Koeffizienten die Parameter bilden.

5. Verfahren nach Anspruch 3, dadurch gekennzeichnet, daß die Differentialgleichung eine komplexe Form, beispielsweise

$$y(t) = -a_1 \dot{y}(t) - a_2 \ddot{y}(t) - \ldots + b_0 u(t) + b_1 \dot{u}(t) + \ldots,$$

aufweist, wobei y(t) und u(t) meßbare Größen sind.

6. Verfahren nach Anspruch 5, dadurch gekennzeichnet, daß die Differentialgleichung die Form $y(t) = -T_1 \cdot \dot{y}(t) + K \cdot u(t) + T_D \cdot \dot{u}(t)$ aufweist, daß die Variable y(t) eine Kraft oder eine der Kraft entsprechende Größe darstellt, die beim Bearbeitungsprozeß ausgeübt wird, und daß u(t) eine für den Bearbeitungsprozeß charakteristische Bewegungsgröße darstellt.

7. Verfahren nach einem der vorhergehenden Ansprüche, dadurch gekennzeichnet, daß die Bewertung der berechneten Parameter durch einen Vergleich mit vorgegebenen Sollparametern und/oder durch eine Berechnung der Änderungsgeschwindigkeit der Parameter und einen Vergleich der berechneten Änderungsgeschwindigkeit mit einer vorgegebenen Änderungsgeschwindigkeit erfolgt.

8. Verfahren nach einem der vorhergehenden Ansprüche, dadurch gekennzeichnet, daß in Abhängigkeit von den bewerteten Parametern aus einem Speicher Fehlerinformationen ausgelesen werden.

9. Verfahren nach Anspruch 8, dadurch gekennzeichnet, daß die Fehlerinformationen Fehlermeldungen und/oder Vorschläge für Maßnahmen zur Behebung von Fehlern und/oder zur Vermeidung von voraussichtlichen Fehlern beinhalten.

10. Verfahren nach einem der vorhergehenden Ansprüche, dadurch gekennzeichnet, daß die beim Betrieb gemessenen Größen die Drehzahl eines oder mehrerer Antriebe, die Spannung und/oder die Stromaufnahme eines oder mehrerer Antriebe und/oder eine oder mehrere der folgenden Größe sind: Position des Werkzeug- bzw. Werkstückträgers, Geschwindigkeit des Werkzeug- bzw. Werkstückträgers, Winkelstellungen rotierender Teile, Kräfte, Wellendrehmomente.

11. Verfahren nach einem der vorhergehenden Ansprüche, dadurch gekennzeichnet, daß die gemessenen Größen vor der Berechnung der Parameter tiefpaßgefiltert werden.

12. Verfahren nach Anspruch 11, dadurch gekennzeichnet, daß die für einen Bearbeitungsprozeß zur Tiefpaßfilterung erforderlichen Daten (Eckfrequenz, Abtastfrequenz, Filterkoeffizienten) für jeweils einen Bearbeitungsprozeß ermittelt und für eine spätere Wiederholung des gleichen Bearbeitungsprozesses nichtflüchtig gespeichert werden.

13. Verfahren nach einem der vorhergehenden Ansprüche, dadurch gekennzeichnet, daß bei einer Bearbeitung von Werkstücken in jeweils mehreren Bearbeitungsschritten die während der Ausführung eines Bearbeitungsschrittes berechneten Parameter gespeichert und bei der Ausführung des gleichen Bearbeitungsschrittes beim folgenden Werkstück zu Vergleichszwecken ausgelesen werden.

14. Verfahren zur Überwachung des Betriebs einer Werkzeugmaschine, vorzugsweise zur spanabhebenden Bearbeitung, dadurch gekennzeichnet,

- daß Schätzgleichungen von mindestens den Bearbeitungsprozeß darstellende Modellgleichungen abgeleitet sind, wobei die Modellgleichungen den Zusammenhang von Parametern des Bearbeitungsprozesses mit an der Werkzeugmaschine meßbaren Größen darstellen,

- daß nach den Schätzgleichungen über beim Betrieb auftretende Größen mit einem Parameterschätzalgorithmus die jeweiligen Parameter berechnet werden und

- daß die berechneten Parameter bewertet werden.

EP 0 418 787 A2

Fig. 1

Fig. 2

Fig. 3

START) 61

62
Initialisierung

ja

$D_0 [m+1, m+1] = 0$
$Z_0 [m+1] = 0$  63

$D_{K-1} \longrightarrow D_K$  64

PROD = det $(D_K)$  65

66
PROD = 0

ja

nein

keine
Parameterschätzung
möglich  67

$\hat{P}_K = [K, T_D, T_1]$  69

ENDE) 68

Fig. 4

```
                    ┌─────────────┐  71
                    │    i = 1     │
                    │    j = 1     │
                    └──────┬──────┘
                           │
         ┌────────────────►│
         │              ╱──┴──╲  72
         │             ╱       ╲
         │            ╱ i ≤ m+1 ╲  nein ──────────────┐
         │            ╲    ?    ╱                      │
         │             ╲       ╱                       │
         │              ╲──┬──╱                        │
         │              ja │                           │
         │          ┌──────┴──────┐  73      ┌─────────┴─────────┐  78
         │          │  Z [i] = 0.0 │         │     INIT = 1       │
         │          └──────┬──────┘          └─────────┬─────────┘
         │                 │                           │
         │    ┌───────────►│                           │
         │    │         ╱──┴──╲  74                     │
         │    │        ╱       ╲                        ▼
         │    │       ╱ i ≤ m+1 ╲  nein ──┐
         │    │       ╲    ?    ╱         │
         │    │        ╲       ╱          │
         │    │         ╲──┬──╱           │
         │    │         ja │              │
         │    │     ┌──────┴──────┐  75   │
         │    │     │ D [i,j] = 0.0│      │
         │    │     └──────┬──────┘       │
         │    │     ┌──────┴──────┐  76   │
         │    │     │   j = j+1    │      │
         │    │     └──────┬──────┘       │
         │    └────────────┘              │
         │                 ┌──────────────┘
         │          ┌──────┴──────┐  77
         │          │   i = i+1    │
         │          └──────┬──────┘
         └─────────────────┘
```

Fig. 5

von 63 (Fig. 4)

**81** $i = 1$ / $j = 1$

**82** $j \leq m + 1$ ?

nach 65 (Fig. 4)

**83** $DII = D$ / $ZI = Z$

**84** $DII \neq 0$ / $ZI \neq 0$ ?  — nein

ja

**85** $HG = \sqrt{LAMBDA} \cdot DII / ZI$ / $SI = 1.0 / \sqrt{1.0 + HG^2}$ / $CI = HG \cdot SI$

**86** $ZI = 0$ ? — nein

ja

**87** $SI = 0$

**88** $SI = 1$

**89** $CI = 1 - SI$

**90** $j \leq m + 1$ — nein

ja

**91** $DH = \sqrt{LAMBDA} \cdot D$ / $D_K[i,j] = CI \cdot DH + SI \cdot Z[j]$ / $D_K[j] = CI \cdot Z[j] - SI \cdot DH$

**92** $j = j + 1$

**93** $i = i + 1$

Fig. 6

14

von 64 (Fig. 4)

PROD = 1.0  95

i = 1  96

PROD = PROD + D (i, i)  97

i ≤ m ?  98  nein

ja

i = i + 1  99

nach 66
(Fig. 4)

Fig. 7

von 66 (Fig. 4)

$$\text{THETA (m)} = \frac{D(m, m+1)}{D(m,m)}$$ 100

$i = m - 1$ 101

THETA (i) = D·(i, m + 1) 102

$j = i + 1$ 103

THETA (i) = THETA (j) − D (i, j) · THETA (j)

$$\text{THETA (i)} = \frac{\text{THETA (i)}}{D(i,i)}$$ 104

$j \leq m$ ? 105

nein

ja

$j = j + 1$ 106

$i \geq 1$ ? 107

$i = i - 1$ 108

THETA [3] = [$a_1$, $b_0$, $b_1$]

$$K = \frac{b_0}{a_1}$$ 109

$$T_D = \frac{b_1}{b_0}$$

$$T_1 = \frac{1}{a_1}$$

Fig. 8

nach 68 (Fig. 4)

START 111

Aufgabe:
Lernen oder
Klassifikation 112 ← CNC

Lesen der
akt. Kennwerte
$K$, $T_D$, $T_1$ 113

Aufgabe
? 114

Klass. ← → Lernen

Berechnen der
Erwartungswerte
$\mu_K$, $\mu_D$, $\mu_T$ 115

Berechnen der
Standartabweichungen
$\sigma_K$, $\sigma_D$, $\sigma_T$ 116

Speichern
$\mu_i$, $\sigma_i$ 117

ENDE 118

INIT
? 121

Lesen von
$\mu_i$ und $\sigma_i$
aus Lernphase 119

$S_{ialt} = 0$ 120

$i = 0$ 121

$i = i + 1$ 122

$S_{ialt}$
an 124 123

Berechnung des
Indikators $S_i$ 124

$|S_i| \geq$ Alarm
? 125

ja

nein

Alarm
$i = 1 : K$
$i = 2 : T_D$
$i = 3 : T_1$ 126

$S_{ialt} = S_i$ 128

$S_i = 0$
$S_{ialt} = 0$ 127

$i \geq 3$
? 129

nein

ja

ENDE 130

Fig. 9

von 123 (Fig. 9)

**133**
$$i = 1 : a_1 = K$$
$$i = 2 : a_2 = T_D$$
$$i = 3 : a_3 = T_1$$

**134**
$$k_i = 0$$

**135**
$$a_i = \mu_i > 0 \, ?$$
nein ← → ja

**140**
$$k_i = k_i - 1$$

**137**
$$k_i = k_i + 1$$

**139**
$$a_i < \mu_i + k_i \cdot \sigma_i$$
ja

**136**
$$a_i > \mu_i + k_i \cdot \sigma_i$$
ja

nein

nein

**141**
$$S_i = K_i + 1 + S_{ialt}$$

**138**
$$S_i = K_i - 1 + S_{ialt}$$

nach 125
(Fig. 9)

Fig. 10